# FASCICULE DE BREVET EUROPEEN

(11) **EP 3 820 746 B1**
(45) Date de publication et mention de la délivrance du brevet: **15.03.2023**
(21) Numéro de dépôt: 19728717.0
(22) Date de dépôt: 10.06.2019
(51) Int. Cl.: B60S 1/34

(54) **BRAS D'ENTRAINEMENT D'UN BALAI D'ESSUYAGE DESTINE A UN VEHICULE AUTOMOBILE**
ANTRIEBSARM ZUM ANTRIEB EINES FÜR EIN KRAFTFAHRZEUG BESTIMMTEN WISCHBLATTS
DRIVE ARM FOR DRIVING A WIPER BLADE INTENDED FOR A MOTOR VEHICLE

(30) Priorité: 09.07.2018 FR 1856272
(43) Date de publication de la demande: 19.05.2021
(73) Titulaire: Valeo Systèmes d'Essuyage, 78322 Le Mesnil Saint Denis (FR)
(72) Inventeur: GIRODOT, Cyrille, 63500 ISSOIRE (FR); KUCHLY, Nicolas, 63500 ISSOIRE (FR)
(74) Mandataire: Valeo Visibility
(86) Numéro de dépôt international: PCT/EP2019/065085
(87) Numéro de publication internationale: WO 2020/011460

(56) Documents cités:
- DE-A1- 1 919 412
- DE-A1-102015 221 910
- US-A1- 2008 155 777

## Description

La présente invention concerne le domaine des systèmes d'essuyage de surfaces vitrées, et plus particulièrement des systèmes d'essuyage destinés aux surfaces vitrées de véhicules automobiles.

Les véhicules automobiles sont couramment équipés de système d'essuyage pour assurer un nettoyage des surfaces vitrées, telles que le pare-brise ou la lunette arrière, et éviter que la vision qu'a le conducteur de son environnement ne soit perturbée. Ces systèmes d'essuyage comprennent classiquement un bras d'entrainement effectuant un mouvement de va-et-vient angulaire et comportent des balais d'essuyage allongés, porteurs eux-mêmes de lames d'essuyage qui frottent contre la surface vitrée et évacuent l'eau et/ou les salissures présentes sur cette surface vitrée de sorte à les amener en dehors du champ de vision du conducteur.

De tels systèmes d'essuyage comprennent généralement au moins un ressort configuré pour plaquer le balai d'essuyage, et donc la lame d'essuyage portée par ce balai d'essuyage, contre la surface vitrée concernée, de sorte à s'assurer que la lame d'essuyage exerce une force d'appui suffisante pour réaliser la fonction de balayage de la surface vitrée à essuyer. La force à appliquer sur ces balais d'essuyage afin de les plaquer contre la surface vitrée varie en fonction d'une longueur du balai d'essuyage, du type de lame d'essuyage et de la force nécessaire pour plaquer le balai d'essuyage sur le galbe de la surface vitrée.

Les constructeurs automobiles doivent donc concevoir, tester et fabriquer une multitude de systèmes d'essuyage correspondant à la multitude de modèles de surface vitré, afin de répondre aux demandes des clients. La présente invention s'inscrit dans ce contexte et propose un système simple et peu coûteux à mettre en oeuvre qui permet de standardiser, au moins en partie, ces systèmes d'essuyage, de sorte que les coûts de fabrication de ces derniers soient réduits. US-A-2008155777 montre le préambule de la revendication 1.

Un objet de la présente invention concerne ainsi un bras d'entrainement d'un balai d'essuyage destiné à un véhicule automobile, le bras d'entrainement s'étendant le long d'une direction longitudinale, le bras d'entrainement comprenant au moins un premier moyen d'attache d'une première extrémité d'un dispositif de rappel élastique et au moins un deuxième moyen d'attache de la première extrémité du dispositif de rappel élastique. Selon l'invention, une première distance mesurée parallèlement à la direction longitudinale entre le premier moyen d'attache et le deuxième moyen d'attache est non nulle. En d'autres termes, on comprend que le premier moyen d'attache et le deuxième moyen d'attache sont décalés l'un par rapport à l'autre le long de la direction longitudinale.

On comprend que la première extrémité du dispositif de rappel élastique est ainsi destinée à être fixée, alternativement, sur le premier moyen d'attache ou sur le deuxième moyen d'attache. Une fois étiré, ce dispositif de rappel élastique tend à reprendre une position initiale, également appelée position de repos, générant alors une force de rappel élastique permettant de générer une force proportionnelle à une extrémité du bras d'entrainement pour plaquer le balai d'essuyage porté par ce bras d'entrainement contre une surface vitrée du véhicule concerné. On comprend alors qu'en décalant le premier moyen d'attache par rapport au deuxième moyen d'attache, la présente invention permet de faire varier l'élongation de ce dispositif de rappel élastique, permettant ainsi de faire varier cette force de rappel élastique exercée par ce dispositif de rappel élastique et donc de faire varier la force proportionnelle générée à l'extrémité du bras d'entrainement évoquée ci-dessus qui permet de plaquer le balai d'essuyage. Avantageusement, l'élongation du dispositif de rappel élastique est directement proportionnelle à la force de rappel élastique qu'il exerce.

Selon l'invention, le bras d'entrainement comprend au moins un troisième moyen d'attache de la première extrémité du dispositif de rappel élastique, une deuxième distance mesurée entre le premier moyen d'attache et ce troisième moyen d'attache étant non nulle et une troisième distance mesurée entre le deuxième moyen d'attache et le troisième moyen d'attache étant non nulle. Tel que précédemment, on comprend donc que le premier moyen d'attache, le deuxième moyen d'attache et le troisième moyen d'attache sont décalés les uns par rapport aux autres le long de la direction longitudinale. Autrement dit, le dispositif de rappel élastique agencé dans le bras d'entrainement selon l'invention est alors configuré pour exercer trois forces de rappel élastique différentes, en valeurs absolues, en fonction du moyen d'attache sur lequel est fixée la première extrémité de ce dispositif de rappel élastique.

Selon l'invention, une cavité est ménagée dans le bras d'entrainement, les moyens d'attache de la première extrémité du dispositif de rappel élastique s'étendant dans cette cavité. Selon une configuration particulière de la présente invention, la cavité s'étend sur toute une dimension longitudinale du bras d'entrainement. Selon une caractéristique de la présente invention, la cavité est délimitée par au moins un premier flanc et au moins un deuxième flanc, les moyens d'attache étant agencés entre ce premier flanc et ce deuxième flanc, le long d'une direction transversale à la direction longitudinale, au premier flanc et au deuxième flanc. Autrement dit, au moins l'un des moyens d'attache de la première extrémité du dispositif de rappel élastique est agencé entre les deux autres.

Avantageusement, les moyens d'attache de la première extrémité du dispositif de rappel élastique peuvent être décalés les uns par rapport aux autres le long d'une direction verticale perpendiculaire, ou sensiblement perpendiculaire, à la direction longitudinale. Autrement dit, on comprend que, selon la présente invention, ces moyens d'attache de la première extrémité du dispositif de rappel élastique sont décalés les uns par rapport aux autres le long de la direction longitudinale et/ou le long de la direction verticale. Avantageusement, cela permet de faire varier, selon une autre direction, une distance de la ligne d'action du dispositif de rappel élastique par rapport à un centre de rotation, c'est-à-dire par rapport à une zone de liaison entre le bras d'entrainement et un organe de fixation destiné à relier ce bras d'entrainement à un arbre moteur du véhicule. On comprend que l'on peut ainsi faire varier la force générée à l'extrémité du bras d'entrainement qui permet de plaquer le balai d'essuyage contre la surface vitrée du véhicule selon une cette autre direction.

Selon l'invention, la première extrémité du dispositif de rappel élastique prend la forme d'un crochet arrondi, et au moins un moyen d'attache comprend au moins une zone de réception de la première extrémité du dispositif de rappel élastique, cette zone de réception présentant une forme complémentaire à la forme de crochet arrondi que prend la première extrémité du dispositif de rappel élastique de sorte que celle-ci puisse être maintenue sur le moyen d'attache concerné. Avantageusement, tous les moyens d'attache présentent une configuration identique, c'est-à-dire que chaque moyen d'attache présente alors une zone de réception de la première extrémité du dispositif de rappel élastique, cette zone de réception présentant une forme complémentaire à la forme de la première extrémité du dispositif de rappel élastique. Par exemple, au moins une zone de réception de l'un des moyens d'attache, avantageusement chaque zone de réception de chaque moyen d'attache, prend la forme d'une portion de cylindre circulaire qui forme une portée configurée pour recevoir le crochet du dispositif de rappel élastique. Il est entendu que les zones de réception des moyens d'attache peuvent prendre toute autre forme compatible avec la forme de crochet que prend la première extrémité du dispositif de rappel élastique sans sortir du contexte de la présente invention à condition que cette forme des zones de réception permette de maintenir la première extrémité du dispositif de rappel élastique sur le moyen d'attache concerné.

Selon une caractéristique de la présente invention, deux moyens d'attache immédiatement adjacents sont séparés par au moins un muret. Tel qu'évoqué ci-dessus, au moins l'un des moyens d'attache est situé entre les deux autres. On comprend alors que ce moyen d'attache situé entre les deux autres est bordé, de part et d'autre, par deux murets. Avantageusement, ces murets peuvent délimiter, au moins en partie, les zones de réception des moyens d'attache destinées à recevoir la première extrémité du dispositif de rappel élastique. Selon une alternative de réalisation de la présente invention, les moyens d'attache peuvent être dépourvus de murets.

Selon l'invention, le moyen d'attache le plus long est situé entre les deux autres moyens d'attache, le long de la direction transversale à la direction longitudinale. On entend par « moyen d'attache le plus long », le moyen d'attache qui présente une dimension longitudinale supérieure aux dimensions longitudinales des deux autres moyens d'attache, autrement dit, une direction mesurée parallèlement à la direction longitudinale. En d'autres termes, le moyen d'attache situé au milieu des deux autres s'étend au-delà de ceux-ci, le long de la direction longitudinale. Par exemple, la direction transversale peut être perpendiculaire, ou sensiblement perpendiculaire, à la direction longitudinale.

Selon une caractéristique de la présente invention, le bras d'entrainement comprend une zone de liaison à un organe de fixation, cet organe de fixation étant configuré pour fixer le bras d'entrainement sur un arbre moteur. Autrement dit, cet organe de fixation permet un couplage mécanique entre le bras d'entrainement et l'arbre moteur.

Par exemple, le bras d'entrainement peut comprendre un détrompeur configuré pour assurer un positionnement optimal du dispositif de rappel élastique, ce détrompeur étant agencé entre la zone de liaison du bras d'entrainement à l'organe de fixation et les moyens d'attache de la première extrémité du dispositif de rappel élastique. Ce détrompeur peut par exemple prendre la forme d'une tige s'étendant parallèlement à la direction transversale, entre le premier flanc et le deuxième flanc qui délimitent, au moins partiellement, la cavité ménagée dans le bras d'entrainement. Selon l'invention, ce détrompeur est positionné à proximité des moyens d'attache, c'est-à-dire qu'une distance mesurée parallèlement à la direction longitudinale entre la zone de liaison et le détrompeur est supérieure à une distance mesurée parallèlement à la direction longitudinale entre le détrompeur et l'un quelconque des moyens d'attache. Avantageusement, cette tige forme butée au crochet formant la première extrémité du dispositif de rappel élastique de sorte que ce dispositif de rappel élastique ne peut être monté que dans un seul sens, en l'espèce le sens dans lequel il permet le plaquage du balai d'essuyage contre la surface vitrée.

Selon un exemple d'application de la présente invention, la zone de liaison du bras d'entrainement à l'organe de fixation comprend une anse qui délimite un logement destiné à recevoir l'organe de fixation. Selon un autre exemple d'application de la présente invention, la zone de liaison du bras d'entrainement à l'organe de fixation comprend au moins une partie d'une liaison pivot, l'autre partie de cette liaison pivot étant ménagée sur l'organe de fixation.

Avantageusement, le bras d'entrainement peut comprendre au moins un élément de centrage des moyens d'attache de la première extrémité du dispositif de rappel élastique, cet élément de centrage étant agencé entre ces moyens d'attache et chacun des flancs participant à délimiter la cavité ménagée dans le bras d'entrainement. On entend par « élément de centrage », un élément configuré maintenir en position, dans la cavité, les moyens d'attache de la deuxième extrémité du dispositif de rappel élastique. Par exemple, cet élément de centrage comprend au moins deux pavés ajourés respectivement agencés entre l'un des moyens d'attache de la première extrémité du dispositif de rappel élastique et l'un des flancs participant à délimiter la cavité.

Avantageusement, au moins un moyen d'attache de la première extrémité du dispositif de rappel élastique peut être issu de matière avec le bras d'entrainement selon l'invention. Encore plus avantageusement, tous les moyens d'attache de la première extrémité du dispositif de rappel élastique peuvent être issus de matière avec le bras d'entrainement. On entend par « issus de matière », le fait que ce(s) moyen(s) d'attache et le bras d'entrainement forment un ensemble monobloc, c'est-à-dire un ensemble qui ne peut être séparé sans entrainer la détérioration du bras d'entrainement ou de ce(s) moyen(s) d'attache. Alternativement, le bras d'entrainement et les moyens d'attache de la première extrémité du dispositif de rappel élastique sont fabriqués de façon indépendante puis assemblés entre eux.

La présente invention concerne également un système d'essuyage pour véhicule automobile, comprenant au moins un balai d'essuyage porteur d'au moins une lame d'essuyage configurée pour venir au contact d'une surface vitrée du véhicule automobile, et au moins bras d'entrainement selon l'invention, le bras d'entrainement étant configuré pour entrainer en rotation le balai d'essuyage.

Selon l'invention, le bras d'entrainement comprend la zone de liaison du bras d'entrainement à l'organe de fixation, cet organe de fixation étant configuré pour fixer le bras d'entrainement sur un arbre moteur, cet arbre moteur étant configuré pour entraîner en rotation le bras d'entrainement, le système d'essuyage comprenant au moins un dispositif de rappel élastique dont la première extrémité est fixée sur l'un des moyens d'attache ménagés sur le bras d'entrainement et dont une deuxième extrémité est fixée sur l'organe de fixation. On comprend que l'organe de fixation comprend un dispositif de couplage mécanique configuré pour relier mécaniquement l'arbre moteur au bras d'entrainement. Tel que précédemment évoqué, le dispositif de rappel élastique du système d'essuyage selon l'invention est configuré pour exercer une force de rappel élastique sur le balai d'essuyage de sorte à plaquer ce dernier, et plus précisément la lame d'essuyage portée par celui-ci, contre la surface vitrée concernée.

Selon une configuration particulière de la présente invention, les moyens d'attache de la première extrémité du dispositif de rappel élastique peuvent être agencés sur l'organe de fixation, la première extrémité du dispositif de rappel élastique étant alors fixée dans la cavité du bras d'entrainement et la deuxième extrémité de ce dispositif de rappel élastique étant positionnée sur l'un des moyens d'attache.

D'autres caractéristiques, détails et avantages ressortiront plus clairement à la lecture de la description détaillée donnée ci-après à titre indicatif en relation avec les différents exemples de réalisation illustrés sur les figures suivantes :
- la figure 1 illustre un système d'essuyage comprenant au moins un bras d'entrainement selon l'invention et un balai d'essuyage ;
- la figure 2 représente, vue de dessous, une portion du bras d'entrainement selon l'invention, sur laquelle est représenté, de façon schématique, un organe de fixation du bras d'entrainement sur un arbre moteur ;
- la figure 3 est un agrandissement d'une zone du bras d'entrainement au niveau de laquelle sont agencés des moyens d'attache d'un dispositif de rappel élastique ;
- la figure 4 est une vue en perspective de la zone du bras d'entrainement illustrée sur la figure 3 dans laquelle le dispositif de rappel élastique est positionné sur l'un des moyens d'attache illustrés sur la figure 3.

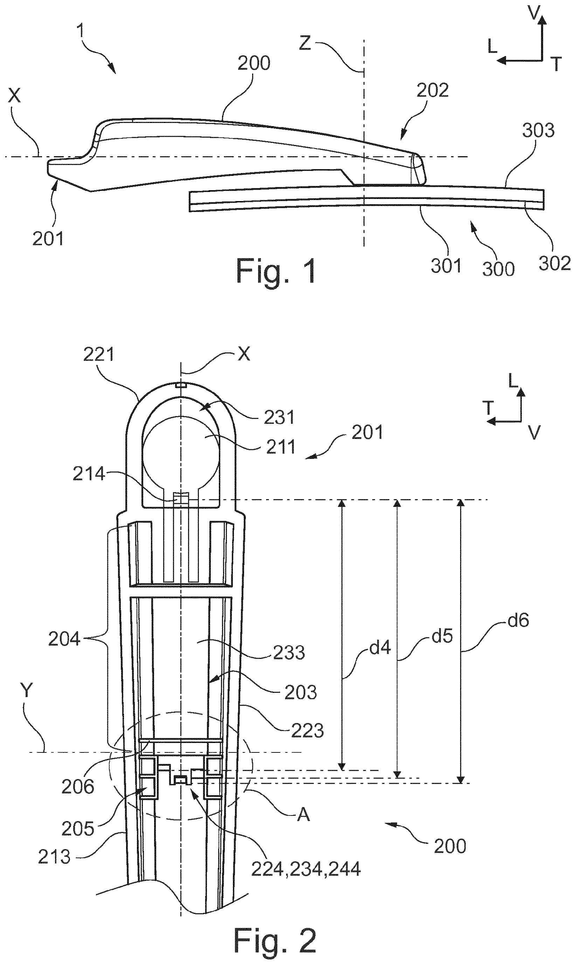

Dans la description qui va suivre, les dénominations longitudinales ou transversales se réfèrent à l'orientation d'un bras d'entrainement intégré à un véhicule automobile. Une direction longitudinale X correspond à une direction d'extension longitudinale du bras d'entrainement, cette direction longitudinale étant parallèle à un axe longitudinal L d'un trièdre L, V, T par exemple représenté à la figure 1. Une direction transversale Y correspond à une direction parallèle à un axe transversal T de ce trièdre L, V, T, l'axe transversal T étant perpendiculaire à l'axe longitudinal L. Une direction verticale Z correspond à une direction parallèle à un axe vertical V du trièdre L, V, T, l'axe vertical V étant perpendiculaire à l'axe longitudinal L et à l'axe transversal T. Les termes « supérieur » et « inférieur » se réfèrent à des positions le long de l'axe vertical V et les termes « avant » et « arrière » à des positions le long de l'axe longitudinal L.

La figure 1 illustre un système d'essuyage 1 selon l'invention qui comprend un bras d'entrainement 200 relié à un balai d'essuyage 300 lui-même porteur d'au moins une lame d'essuyage 301 destinée à venir au contact d'une surface vitrée d'un véhicule automobile, par exemple une lunette arrière de ce véhicule. Le bras d'entrainement 200 comprend une première extrémité longitudinale 201 au niveau de laquelle il est relié à un organe de fixation configuré pour assurer un couplage mécanique entre le bras d'entrainement 200 et un arbre moteur, cet arbre moteur étant configuré pour entraîner en rotation le bras d'entrainement 200, et une deuxième extrémité longitudinale 202 au niveau de laquelle il est relié au balai d'essuyage 300. On comprend que l'arbre moteur est configuré pour entraîner en rotation, grâce à l'organe de fixation, le bras d'entrainement 200 et ainsi permettre le balayage de la surface vitrée à nettoyer ou à essuyer. L'organe de fixation est par exemple illustré de façon schématique sur la figure 2.

Selon un exemple de réalisation illustré sur la figure 1, le balai d'essuyage 300 s'étend parallèlement à la direction longitudinale X et comprend quant à lui la lame d'essuyage 301 qui forme la portion de ce balai d'essuyage 300 destinée à venir au contact de la surface vitrée de sorte à évacuer de l'eau et/ou des salissures présentes sur cette surface vitrée. Le balai d'essuyage 300 comprend également au moins un organe de flexion 302 configuré pour générer une courbure du balai d'essuyage 300 de sorte que celui-ci suive au plus près une courbure de la surface vitrée concernée. Un tel balai d'essuyage 300 peut en outre comprendre un déflecteur d'air 303 configuré pour transformer une pression appliquée par un flux d'air circulant le long de la surface vitrée en une force d'appui ce balai d'essuyage 300 contre cette surface vitrée. Le balai d'essuyage 300 est relié au bras d'entrainement 300, et plus particulièrement à la deuxième extrémité longitudinale 202 de ce bras d'entrainement 300, par un dispositif de connexion agencé sensiblement en son milieu.

Selon un exemple de réalisation, le balai d'essuyage 300 comprend en outre un support porteur de la lame d'essuyage 301, de l'organe de flexion 302 et du déflecteur d'air 303. Alternativement, on pourra prévoir que la lame d'essuyage soit fixée, par exemple par collage, au déflecteur d'air, que le déflecteur d'air et la lame d'essuyage soient monobloc, c'est-à-dire qu'ils forment un ensemble unique qui ne peut être séparer sans entraîner la détérioration du déflecteur d'air ou de la lame d'essuyage, ou encore que le balai d'essuyage comprenne deux organes de flexion. Il est entendu que les exemples de réalisation décrits ici ne sont donnés qu'à titre d'exemple et que le bras d'entrainement selon l'invention pourrait s'adapter à d'autres types de balais d'essuyage sans sortir du contexte de l'invention.

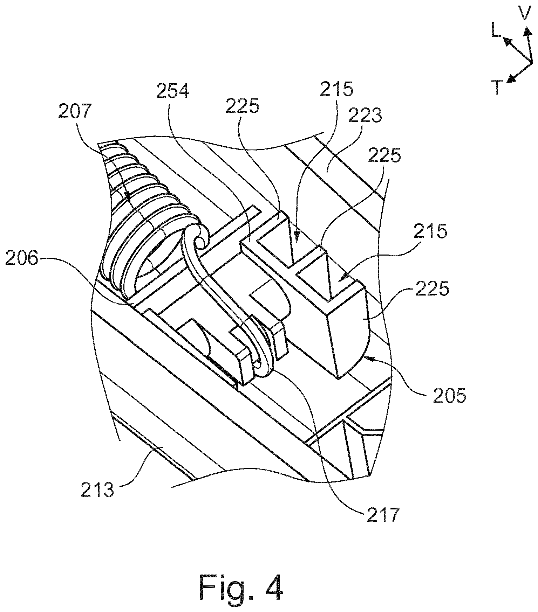

Afin d'assurer un essuyage optimal de la surface vitrée, la lame d'essuyage 301 doit racler cette surface vitrée. Afin d'assurer un contact entre la lame d'essuyage 301 et la surface vitrée, le bras d'entrainement 200 loge un dispositif de rappel élastique - par exemple partiellement illustré sur la figure 4 - configuré pour exercer une force de rappel élastique sur le bras d'entrainement 200 de sorte à plaquer la lame d'essuyage 301 contre la surface vitrée concernée. Avantageusement, l'organe de flexion évoqué ci-dessus permet de répartir de façon uniforme cette force de rappel élastique exercée par le dispositif de rappel élastique sur toute une dimension longitudinale, c'est-à-dire une dimension mesurée parallèlement à la direction longitudinale X, du balai d'essuyage 300. Ainsi, la totalité de la lame d'essuyage 301 est en contact avec cette surface vitrée.

Tel que par exemple illustré sur la figure 2, le bras d'entrainement 200 comprend ainsi une cavité 203 dont au moins une portion 204 est apte à recevoir le dispositif de rappel élastique évoqué ci-dessus. Cette figure 2 représente le bras d'entrainement 200 selon l'invention vue de dessous et rend ainsi particulièrement visible cette cavité 203. Cette cavité 203 s'étend ainsi sur toute une dimension longitudinale du bras d'entrainement 200 et elle est délimitée par au moins un premier flanc 213, un deuxième flanc 223 et par une paroi de fond 233 reliant le premier flanc 213 au deuxième flanc 223. Cette figure 2 illustre également, de façon schématique, l'organe de fixation 211 destiné à relier le bras d'entrainement 200 à l'arbre moteur. Le bras d'entrainement 200 comprend ainsi une zone de liaison à l'organe de fixation 211. Selon l'exemple illustré ici, cette zone de liaison est formée par la première extrémité longitudinale 201 de ce bras d'entrainement 200 qui prend la forme d'une anse 221 qui délimite un logement 231 dans lequel est reçu cet organe de fixation 211.

La portion 204 de la cavité 203 apte à recevoir le dispositif de rappel élastique est quant à elle délimitée d'une part par l'anse 221 formant la première extrémité longitudinale 201 du bras d'entrainement 200 et d'autre part par des moyens d'attache 224, 234, 244 d'une première extrémité - par exemple visible sur la figure 4 - du dispositif de rappel élastique. Par exemple, les moyens d'attache 224, 234, 244 de la première extrémité du dispositif de rappel élastique peuvent être issus de matière avec le bras d'entrainement 200. En d'autres termes ce bras d'entrainement 200 et ces moyens d'attache 224, 234, 244 forment un ensemble monobloc, c'est-à-dire un ensemble qui ne peut être séparé sans entraîner la détérioration du bras d'entrainement 200 ou d'au moins l'un des moyens d'attache 224, 234, 244. Par exemple, le bras d'entrainement 200 et ces moyens d'attache 224, 234, 244 peuvent être co-moulés. L'organe de fixation 211 configuré pour assurer le couplage mécanique du bras d'entrainement 200 sur l'arbre moteur comprend également un moyen de fixation 214 d'une deuxième extrémité - non illustrée ici - de ce dispositif de rappel élastique.

Selon un exemple de réalisation non illustré ici, on pourra prévoir que le bras d'entrainement soit dépourvu d'anse et que l'organe de fixation soit relié à ce bras d'entrainement par une liaison pivot. Autrement dit, selon cet exemple de réalisation, la zone de liaison du bras d'entrainement à l'organe de fixation est formée par au moins une partie de cette liaison pivot.

Selon l'exemple illustré ici, le bras d'entrainement 200 comprend trois moyens d'attache 224, 234, 244 monoblocs, c'est-à-dire que ces trois moyens d'attache 224, 234, 244 forment un ensemble qui ne peut être séparé sans occasionner la détérioration de l'un d'entre eux. Il est entendu qu'il ne s'agit que d'un exemple de réalisation de la présente invention et que ce bras d'entrainement 200 pourrait comprendre plus de trois moyens d'attache de la première extrémité de ce dispositif de rappel élastique sans sortir du contexte de la présente invention.

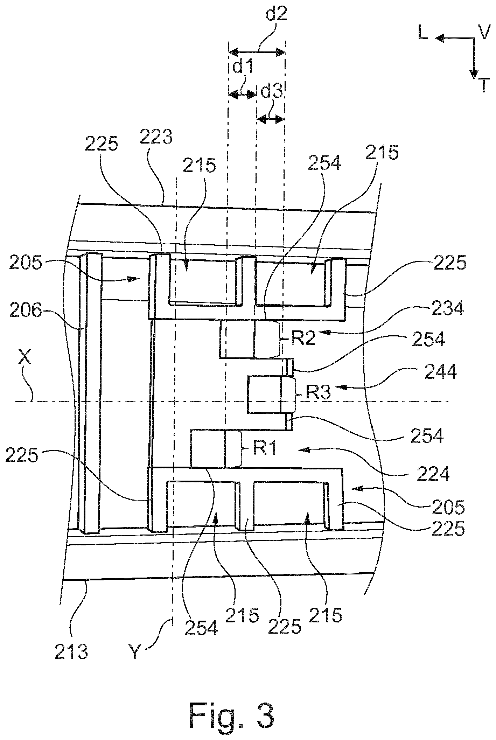

Quel que soit le nombre de moyens d'attache ménagés dans la cavité du bras d'entrainement, ils sont tous situés à des distances non nulles les uns des autres le long de la direction longitudinale X. Ainsi, une première distance d1 mesurée entre un premier moyen d'attache 224 et un deuxième moyen d'attache 234, une deuxième distance d2 mesurée entre le premier moyen d'attache 224 et un troisième moyen d'attache 244 et une troisième distance d3 mesurée entre le deuxième moyen d'attache 234 et le troisième moyen d'attache 244 sont toutes les trois non nulles, ces trois distances d1, d2, d3 étant mesurées parallèlement à la direction longitudinale X. Ces première, deuxième et troisième distances d1, d2, d3 sont par exemple représentées sur la figure 3. On comprend alors que ces moyens d'attache 224, 234, 244 sont situés à des distances longitudinales différentes du moyen de fixation 214 de la deuxième extrémité du dispositif de rappel élastique. On entend par « distances longitudinales » des distances mesurées parallèlement à la direction longitudinale X. Autrement dit, une quatrième distance d4 mesurée entre le moyen de fixation 214 et le premier moyen d'attache est différente d'une cinquième distance d5 mesurée entre le moyen de fixation 214 et le deuxième moyen d'attache et que ces quatrième et cinquième distances sont également différentes d'une sixième distance d6 mesurée entre le moyen de fixation 214 et le troisième moyen d'attache 244.

On comprend alors qu'en fonction du moyen d'attache 224, 234, 244 sur lequel est fixée la première extrémité longitudinale du dispositif de rappel élastique, ce dernier est plus ou moins allongé. Par définition, ce dispositif de rappel élastique tend, lorsqu'il est étiré, à reprendre une position initiale, également appelée position de repos. Il en résulte que la force de rappel élastique exercée par ce dispositif de rappel élastique est plus ou moins importante en fonction de l'élongation à laquelle il est soumis, c'est-à-dire en fonction du moyen d'attache 224, 234, 244 sur lequel est fixée la première extrémité de ce dispositif de rappel élastique. Ainsi, plus l'élongation de ce dispositif de rappel élastique est importante, plus la force de rappel élastique qu'il exerce est grande. A l'inverse, plus l'élongation de ce dispositif de rappel élastique est faible, moins la force de rappel élastique qu'il exerce est importante.

Selon un exemple illustré sur les figures 2 à 4, la quatrième distance d4 est inférieure à la cinquième distance d5 qui est elle-même inférieure à la sixième distance d6. En d'autres termes, lorsque la première extrémité du dispositif de rappel élastique est fixée sur le premier moyen d'attache 224, la force de rappel élastique qu'il exerce sur le bras d'entrainement 200 est moins importante que lorsque cette première extrémité du dispositif de rappel élastique est fixée sur le deuxième moyen d'attache 234 ou sur le troisième moyen d'attache 244. On remarque également que le premier moyen d'attache 224, le troisième moyen d'attache 244 et le deuxième moyen d'attache 234 sont agencés dans cet ordre, le long de la direction transversale Y, entre le premier flanc 213 et le deuxième flanc 223. Autrement dit, le troisième moyen d'attache 244 est, toujours selon l'exemple illustré ici, pris en sandwich entre le premier moyen d'attache 224 et le deuxième moyen d'attache 234. Selon l'invention, le moyen d'attache de plus long, c'est à dire le moyen d'attache sur lequel s'exerce la force de rappel élastique la plus importante, est ainsi agencé au milieu des deux autres.

Il est entendu qu'il ne s'agit que d'un exemple de réalisation et que les ratios des distances d4, d5, d6 les unes par rapport aux autres, ainsi que l'ordre dans lequel sont agencés les moyens d'attache 224, 234, 244, pourraient être modifiés sans sortir du contexte de la présente invention. On comprend donc que le bras d'entrainement selon l'invention est adapté pour être utilisé sur différents types de véhicule, sans que l'efficacité du nettoyage de la surface vitrée concernée ne soit altérée.

Tel que représenté sur la figure 2, on remarque que ces moyens d'attache 224, 234, 244 s'étendent seulement sur une portion transversale de la cavité 203. Ainsi, on remarque que ces moyens d'attache 224, 234, 244 sont bordés latéralement, c'est-à-dire le long de la direction transversale Y, par un élément de centrage 205. Selon l'exemple illustré ici, cet élément de centrage 205 comprend deux pavés ajourés, chacun de ces pavés ajourés étant agencé entre les moyens d'attache 224, 234, 244 et l'un des flancs 213, 223 délimitant la cavité 203. Cet élément de centrage 205 permet avantageusement d'assurer la position transversale, c'est-à-dire la position de long de la direction transversale Y de ces moyens d'attache 224, 234, 244. Selon l'exemple illustré ici, cet élément de centrage 205 est issu de matière avec le bras d'entrainement 200 et avec les moyens d'attache 224, 234, 244 de la première extrémité du dispositif de rappel élastique. Cet élément de centrage 205 sera plus amplement décrit ci-après.

On remarque également la présence d'un détrompeur 206 agencé entre le point de fixation 214 de la deuxième extrémité longitudinale du dispositif de rappel élastique et les moyens d'attache 224, 234, 244, à proximité de ces moyens d'attache 224, 234, 244. On entend par « à proximité des moyens d'attache 224, 234, 244 », le fait qu'une distance mesurée parallèlement à la direction longitudinale X entre le détrompeur 206 et n'importe lequel de ces moyens d'attache 224, 234, 244 est inférieure à une distance mesurée parallèlement à la direction longitudinale X entre le détrompeur 206 et le point de fixation 214 de la deuxième extrémité du dispositif de rappel élastique. Par exemple, ce détrompeur 206 peut également être co-moulé avec le bras d'entrainement 200 et les moyens d'attache 224, 234, 244, c'est-à-dire que l'ensemble monobloc tel que décrit ci-dessus est alors constitué du bras d'entrainement 200, du détrompeur 206 et des moyens d'attache 224, 234, 244. Ce détrompeur 206 permet d'assurer le bon positionnement de ce dispositif de rappel élastique et sera plus amplement décrit ci-dessous, en référence aux figures 3 et 4.

En référence aux figures 3 et 4, nous allons maintenant décrire plus en détails les trois moyens d'attache 224, 234, 244 de la deuxième extrémité du dispositif de rappel élastique ménagés dans la cavité. Ces figures 3 et 4 sont des agrandissements d'une zone A telle qu'indiquée sur la figure 2, la figure 3 étant une vue de dessus de cette zone A et la figure 4 étant une vue en perspective de cette zone A. La figure 4 illustre également le dispositif de rappel élastique 207 positionné sur le troisième moyen d'attache 244.

Tel que précédemment décrit, les moyens d'attache 224, 234, 244 sont décalés les uns par rapport aux autres le long de la direction longitudinale X. La figure 3 illustre ainsi les première, deuxième et troisième distances d1, d2, d3 mesurées entre ces moyens d'attache 224, 234, 244 et décrites ci-dessus. Le moyen de fixation de la deuxième extrémité du dispositif de rappel élastique 207 étant fixe, on comprend que c'est ce décalage longitudinal des moyens d'attache 224, 234, 244 de la première extrémité 217 du dispositif de rappel élastique 207 qui permet de faire varier l'élongation de ce dispositif de rappel élastique 207, et donc de faire varier la force de rappel élastique qu'il exerce. Tel que par exemple représenté sur la figure 4, au moins la première extrémité du dispositif de rappel élastique prend la forme d'un crochet arrondi. Selon une variante de réalisation non illustrée ici, les moyens d'attache peuvent également être décalés les uns par rapport aux autres le long d'une direction verticale Z, cette direction verticale Z étant par exemple représentée sur la figure 1. Avantageusement, cela permet de faire varier, selon une autre direction, une distance de la ligne d'action du dispositif de rappel élastique par rapport à un centre de rotation, c'est-à-dire par rapport à la zone de liaison entre le bras d'entrainement et l'organe de fixation destiné à relier ce bras d'entrainement à l'arbre moteur du véhicule. Autrement dit, ce décalage le long de la direction verticale Z permet de faire varier la force qui permet de plaquer le balai d'essuyage contre la surface vitrée du véhicule. Il est ainsi entendu que les moyens d'attache peuvent ainsi être décalés les uns par rapport aux autres le long de la direction longitudinale et/ou le long de la direction verticale.

Chaque moyen d'attache 224, 234, 244 comprend une zone de réception R1, R2, R3, de la première extrémité 217 du dispositif de rappel élastique 207, chaque zone de réception R1, R2, R3 étant délimitée transversalement par au moins deux murets 254 qui s'étendent au-delà de cette zone de réception, le long de la direction longitudinale X. On comprend que ces murets 254 permettent de maintenir la première extrémité 217 du dispositif de rappel élastique 207 en position dans la zone de réception R1, R2, R3 concernée et ainsi d'éviter que cette première extrémité 217 ne glisse vers l'un ou l'autre des autres moyens d'attache 224, 234, 244, ce qui modifierait l'élongation à laquelle est soumis le dispositif de rappel élastique 207, et donc la force de rappel élastique appliquée par ce dispositif de rappel élastique 207 sur le bras d'entrainement.

Les première, deuxième et troisième distances d1, d2, d3 décrites ci-dessus et illustrées sur la figure 3 correspondent à des distances mesurées entre les zones de réception R1, R2, R3 de ces moyens d'attache 224, 234, 244.

Selon l'exemple illustré ici, on remarque que les murets 254 qui délimitent la zone de réception R3 du troisième moyen d'attache 244 participent également à délimiter les zones de réception R1, R2 des premier et deuxième moyens d'attache 224, 234. Ainsi, la zone de réception R1 du premier moyen d'attache 224 est délimitée transversalement par deux murets 254 dont un délimite la zone de réception R3 du troisième moyen d'attache 244 et dont l'autre est formé par une portion de l'élément de centrage 205 évoqué ci-dessus. De façon analogue, la zone de réception R2 du deuxième moyen d'attache 234 est délimitée transversalement par deux murets 254 dont un délimite partiellement la zone de réception R3 du troisième moyen d'attache 244 et dont l'autre est formé par une portion de l'élément de centrage 205 évoqué ci-dessus.

Selon l'exemple illustré ici, chacune des zones de réception R1, R2, R3 de chacun des moyens d'attache 224, 234, 244 prend la forme d'une portion de cylindre circulaire délimitée de part et d'autre par les murets 254 et apte à recevoir la première extrémité 217 du dispositif de rappel élastique, et plus particulièrement, le crochet arrondi formant cette première extrémité 217 du dispositif de rappel élastique 207. Autrement dit, cette portion de cylindre circulaire forme une portée de forme complémentaire à la forme de la première extrémité du dispositif de rappel élastique, de sorte que celle-ci soit maintenue sur la moyen d'attache concernée, et plus particulièrement dans la zone de réception du moyen d'attache concerné. Il est entendu qu'il ne s'agit ici que d'un exemple de réalisation de la présente invention et que les zones de réception pourraient prendre toute autre forme compatible avec la forme de la première extrémité du dispositif de rappel élastique sans sortir du contexte de la présente invention.

Tel que précédemment décrit, l'élément de centrage 205 comprend deux pavés ajourés respectivement agencés entre le premier moyen d'attache 224 et le premier flanc 213 et entre le deuxième moyen d'attache 234 et le deuxième flanc 223. Avantageusement, ces pavés ajourés sont symétriques par rapport à un plan longitudinal et vertical, c'est-à-dire un plan dans lequel s'inscrivent l'axe longitudinal L et l'axe vertical V, de sorte que les références portées sur l'un de ces pavés ajourés sont directement transposables à l'autre de ces pavés ajourés. Selon l'exemple illustré ici, chaque pavé ajouré comprend deux ajours 215 de sorte que trois branches 225 s'étendent depuis l'un des murets 254 participant à délimiter les zones de réception R1, R2, du premier ou du deuxième moyen d'attache 224, 234 jusqu'à l'un des flancs 213, 223 qui délimitent la cavité, étant entendu que les murets 254 participant à délimiter les zones de réception des premier et deuxième moyens d'attache sont formés par une portion de ce pavé ajouré. Autrement dit, chaque pavé ajouré prend la forme d'un E vu dans une coupe réalisées selon un plan dans lequel s'inscrivent l'axe longitudinal L et l'axe transversal T. Avantageusement, ces ajours 215 permettent d'éviter d'alourdir inutilement le bras d'entrainement selon l'invention et de limiter les retassures qui peuvent apparaître au cours de la fabrication d'un tel bras d'entrainement. Avantageusement, ces branches 225 permettent en outre d'éviter un mauvais positionnement de la première extrémité du dispositif de rappel élastique, c'est-à-dire qu'elles permettent d'éviter que cette première extrémité du dispositif de rappel élastique ne soit positionnée entre l'un des murets 224, 234 participant à former l'élément de centrage 205 et les flancs 213, 223. On remarque également que ces pavés ajourés s'étendent au-delà des moyens d'attache 224, 234, 244, à la fois le long de l'axe longitudinal L et le long de l'axe vertical V.

Les figures 3 et 4 rendent également particulièrement visible le détrompeur 206 mentionné plus haut. Ce dernier prend ainsi la forme d'une tige qui s'étend majoritairement selon la direction transversale Y, entre le premier flanc 213 et le deuxième flanc 223 qui délimitent la cavité. Autrement dit, cette tige est perpendiculaire, ou sensiblement perpendiculaire, au premier flanc 213 et au deuxième flanc 223. Tel que particulièrement visible sur la figure 4, ce détrompeur 206 permet d'assurer le bon positionnement du dispositif de rappel élastique 207 en formant butée à ce dernier. Ainsi, si le dispositif de rappel élastique 207 est monté à l'envers, il est impossible de l'accrocher à l'une ou l'autre des zones de réception R1, R2, R3 des premier, deuxième ou troisième moyens d'attache 224, 234, 244.

Selon un exemple de réalisation de la présente invention non illustré ici, on pourra prévoir que les moyens d'attache soient ménagés sur l'organe de fixation qui permet de relier le bras d'entrainement à l'arbre moteur. En d'autres termes, selon cet exemple de réalisation, la première extrémité du dispositif de rappel élastique est alors fixée dans la cavité du bras d'entrainement et la deuxième extrémité de ce dispositif de rappel élastique est quant à elle agencé sur l'un de ces moyens d'attache. Ainsi, la variation de l'élongation du dispositif de rappel élastique, et donc de la force qu'il exerce sur le bras d'entrainement, dépend du moyen d'attache sur lequel est fixée cette deuxième extrémité du dispositif de rappel élastique.

La présente invention propose ainsi un moyen simple et peu coûteux pour standardiser, au moins en partie, les bras d'entrainement de balais d'essuyage destinés aux systèmes d'essuyage de véhicule automobile. On comprend que, grâce à la présente invention, un même bras d'entrainement peut être agencé sur différents modèles de véhicule de sorte que les coûts de fabrication de tels bras d'entrainement sont réduits.

La présente invention ne saurait toutefois se limiter aux moyens et configurations décrits et illustrés dans le présent document. En particulier la forme et la disposition des moyens d'attache de la deuxième extrémité du dispositif de rappel élastique peuvent être modifiées sans nuire à l'invention dans la mesure où elles remplissent les fonctionnalités qui viennent d'être décrites.

## Revendications

1. Bras d'entrainement (200) d'un balai d'essuyage (300) destiné à un véhicule automobile, le bras d'entraînement (200) s'étendant le long d'une direction longitudinale (X), le bras d'entrainement (200) comprenant au moins un premier moyen d'attache (224) d'une première extrémité (217) d'un dispositif de rappel élastique (207), un deuxième moyen d'attache (234) de la première extrémité (217) du dispositif de rappel élastique (207), une première distance (d1) mesurée parallèlement à la direction longitudinale (X) entre le premier moyen d'attache (224) et le deuxième moyen d'attache (234) étant non nulle, et au moins un troisième moyen d'attache (244) de la première extrémité (217) du dispositif de rappel élastique (207), une deuxième distance (d2) mesurée entre le premier moyen d'attache (224) et ce troisième moyen d'attache (244) étant non nulle et une troisième distance (d3) mesurée entre le deuxième moyen d'attache (234) et le troisième moyen d'attache (244) étant non nulle, **caractérisé en ce que** le moyen d'attache (224, 234, 244) le plus long est situé entre les deux autres moyens d'attache le long d'une direction transversale (Y) à la direction longitudinale (X).

2. Bras d'entraînement (200) selon la revendication précédente, dans lequel une cavité (203) est ménagée dans le bras d'entrainement (200) et dans lequel les moyens d'attache (224, 234, 244) de la première extrémité (217) du dispositif de rappel élastique (207) s'étendent dans cette cavité (203).

3. Bras d'entrainement (200) selon la revendication précédente, dans lequel les moyens d'attache (224, 234, 244) de la première extrémité (217) du dispositif de rappel élastique (207) sont décalés les uns par rapport aux autres le long d'une direction verticale (Z) perpendiculaire, ou sensiblement perpendiculaire, à la direction longitudinale (X).

4. Bras d'entrainement (200) selon l'une quelconque des revendications précédentes, dans lequel la première extrémité (217) du dispositif de rappel élastique (207) prend la forme d'un crochet arrondi, et dans lequel au moins un moyen d'attache (224, 234, 244) comprend au moins une zone de réception (R1, R2, R3) de la première extrémité (217) du dispositif de rappel élastique (207), cette zone de réception (R1, R2, R3) prenant la forme d'une portion de cylindre circulaire.

5. Bras d'entrainement (200) selon l'une quelconque des revendications précédentes, dans lequel deux moyens d'attache (224, 234, 244) immédiatement adjacents sont séparés par au moins un muret (254).

6. Bras d'entrainement (200) selon l'une quelconque des revendications précédentes, comprenant une zone de liaison (221, 231) à un organe de fixation (211), cet organe de fixation (211) étant configuré pour fixer le bras d'entrainement (200) sur un arbre moteur.

7. Système d'essuyage (1) pour véhicule automobile, comprenant au moins un balai d'essuyage (300) porteur d'au moins une lame d'essuyage (301) configurée pour venir au contact d'une surface vitrée du véhicule automobile, et au moins un bras d'entrainement (200) selon l'une quelconque des revendications précédentes, le bras d'entrainement (200) étant configuré pour entrainer en rotation le balai d'essuyage (300).

8. Système d'essuyage (1) selon la revendication précédente, le bras d'entrainement (200) comprenant une zone de liaison (221, 231) du bras d'entrainement (200) à un organe de fixation (211), cet organe de fixation (211) étant configuré pour fixer le bras d'entraînement (200) sur un arbre moteur, l'arbre moteur étant configuré pour entrainer en rotation le bras d'entrainement (200), le système d'essuyage (1) comprenant au moins un dispositif de rappel élastique (207) dont une première extrémité (217) est fixée sur l'un des moyens d'attache (224, 234, 244) ménagés dans le bras d'entraînement (200) et dont une deuxième extrémité est fixée sur l'organe de fixation (211).

## Patentansprüche

1. Antriebsarm (200) eines für ein Kraftfahrzeug bestimmten Wischblatts (300), wobei sich der Antriebsarm (200) entlang einer Längsrichtung (X) erstreckt, wobei der Antriebsarm (200) mindestens ein erstes Mittel zur Befestigung (224) eines ersten Endes (217) einer elastischen Rückstellvorrichtung (207), ein zweites Mittel zur Befestigung (234) des ersten Endes (217) der elastischen Rückstellvorrichtung (207), wobei ein parallel zur Längsrichtung (X) zwischen dem ersten Befestigungsmittel (224) und dem zweiten Befestigungsmittel (234) gemessener erster Abstand (d1) von null verschieden ist, und mindestens ein drittes Mittel zur Befestigung (244) des ersten Endes (217) der elastischen Rückstellvorrichtung (207), wobei ein zwischen dem ersten Befestigungsmittel (224) und diesem dritten Befestigungsmittel (244) gemessener zweiter Abstand (d2) von null verschieden ist und ein zwischen dem zweiten Befestigungsmittel (234) und dem dritten Befestigungsmittel (244) gemessener dritter Abstand (d3) von null verschieden ist, umfasst, **dadurch gekennzeichnet, dass** sich das längste Befestigungsmittel (224, 234, 244) entlang einer quer zur Längsrichtung (X) verlaufenden Richtung (Y) zwischen den zwei anderen Befestigungsmitteln befindet.

2. Antriebsarm (200) nach dem vorhergehenden Anspruch, wobei ein Hohlraum (203) im Antriebsarm (200) ausgebildet ist und wobei sich die Mittel zur Befestigung (224, 234, 244) des ersten Endes (217) der elastischen Rückstellvorrichtung (207) in diesem Hohlraum (203) erstrecken.

3. Antriebsarm (200) nach dem vorhergehenden Anspruch, wobei die Mittel zur Befestigung (224, 234, 244) des ersten Endes (217) der elastischen Rückstellvorrichtung (207) entlang einer vertikalen Richtung (Z), die zur Längsrichtung (X) senkrecht oder im Wesentlichen senkrecht ist, zueinander versetzt sind.

4. Antriebsarm (200) nach einem der vorhergehenden Ansprüche, wobei das erste Ende (217) der elastischen Rückstellvorrichtung (207) die Form eines abgerundeten Hakens hat und wobei mindestens ein Befestigungsmittel (224, 234, 244) mindestens einen Bereich zur Aufnahme (R1, R2, R3) des ersten Endes (217) der elastischen Rückstellvorrichtung (207) umfasst, wobei dieser Aufnahmebereich (R1, R2, R3) die Form eines Kreiszylinderabschnitts hat.

5. Antriebsarm (200) nach einem der vorhergehenden Ansprüche, wobei zwei unmittelbar aneinander angrenzende Befestigungsmittel (224, 234, 244) durch mindestens eine Trennwand (254) getrennt sind.

6. Antriebsarm (200) nach einem der vorhergehenden Ansprüche, welcher einen Bereich zur Verbindung (221, 231) mit einem Befestigungsorgan (211) umfasst, wobei dieses Befestigungsorgan (211) dazu ausgebildet ist, den Antriebsarm (200) auf einer Antriebswelle zu befestigen.

7. Wischsystem (1) für ein Kraftfahrzeug, welches mindestens ein Wischblatt (300), das mindestens einen Wischgummi (301) trägt, der dazu ausgebildet ist, mit einer Glasfläche des Kraftfahrzeugs in Kontakt zu kommen, und mindestens einen Antriebsarm (200) nach einem der vorhergehenden Ansprüche umfasst, wobei der Antriebsarm (200) dazu ausgebildet ist, das Wischblatt (300) drehend anzutreiben.

8. Wischsystem (1) nach dem vorhergehenden Anspruch, wobei der Antriebsarm (200) einen Bereich zur Verbindung (221, 231) des Antriebsarmes (200) mit einem Befestigungsorgan (211) umfasst, wobei dieses Befestigungsorgan (211) dazu ausgebildet ist, den Antriebsarm (200) auf einer Antriebswelle zu befestigen, wobei die Antriebswelle dazu ausgebildet ist, den Antriebsarm (200) drehend anzutreiben, wobei das Wischsystem (1) mindestens eine elastische Rückstellvorrichtung (207) umfasst, von der ein erstes Ende (217) an einem der im Antriebsarm (200) angeordneten Befestigungsmittel (224, 234, 244) befestigt ist und von der ein zweites Ende an dem Befestigungsorgan (211) befestigt ist.

## Claims

1. A drive arm (200) for driving a wiper blade (300) intended for a motor vehicle, the drive arm (200) extending along a longitudinal direction (X), the drive arm (200) comprising at least one first attachment means (224) for a first end (217) of an elastic return device (207), a second attachment means (234) for the first end (217) of the elastic return device (207), a first distance (d1) measured parallel to the longitudinal direction (X) between the first attachment means (224) and the second attachment means (234 ) being non-zero, and at least one third attachment means (244) for the first end (217) of the elastic return device (207), a second distance (d2) measured between the first attachment means (224) and the third attachment means being non-zero and a third distance (d3) measured between the second attachment means (234) and the third attachment means (244) being non-zero, **characterized in that** the longest attachment means (224, 234, 244) is located between the other two attachment means (224, 234, 244) along a transverse direction (Y) transverse to the longitudinal direction (X).

2. The drive arm (200) as claimed in the preceding claim, wherein a cavity (203) is formed in the drive arm (200) and wherein the attachment means (224, 234, 244) for the first end (217) of the elastic return device (207) extend in this cavity (203).

3. The drive arm (200) as claimed in the preceding claim, wherein the attachment means (224, 234, 244) for the first end (217) of the elastic return device (207) are offset relative to one another along a vertical direction (Z) perpendicular, or substantially perpendicular, to the longitudinal direction (X).

4. The drive arm (200) as claimed in any one of the preceding claims, wherein the first end (217) of the elastic return device (207) takes the form of a rounded hook, and wherein at least one attachment means (224, 234, 244) comprises at least one receiving region (R1, R2, R3) for the first end (217) of the elastic return device (207), this receiving region (R1, R2, R3) taking the form of a circular cylinder portion.

5. The drive arm (200) as claimed in any one of the preceding claims, wherein two immediately adjacent attachment means (224, 234, 244) are separated by at least one wall (254).

6. The drive arm (200) as claimed in any one of the preceding claims, comprising a region (221, 231) for connecting to a fixing member (211), this fixing member (211) being configured to fix the drive arm (200) on a motor shaft.

7. A wiper system (1) for a motor vehicle, comprising at least one wiper blade (300) carrying at least one wiper rubber (301) configured to come into contact with a glazed surface of the motor vehicle, and at least one drive arm (200) as claimed in any one of the preceding claims, the drive arm (200) being configured to drive the wiper blade (300) in rotation.

8. The wiper system (1) as claimed in the preceding claim, the drive arm (200) comprising a region (221, 231) for connecting the drive arm (200) to a fixing member (211), this fixing member (211) being configured to fix the drive arm (200) on a motor shaft, the motor shaft being configured to drive the drive arm (200) in rotation, the wiper system (1) comprising at least one elastic return device (207), a first end (217) of which is fixed on one of the attachment means (224, 234, 244) formed in the drive arm (200) and a second end of which is fixed on the fixing member (211).
